# EUROPEAN PATENT SPECIFICATION

(11) **EP 1 923 513 B1**
(45) Date of publication and mention of the grant of the patent: **30.03.2016**
(21) Application number: 05791076.2
(22) Date of filing: 26.08.2005
(51) Int. Cl.: E03D 1/24

(54) **SYSTEM FOR BLOCKING THE MOVEMENT OF REGULATING ELEMENTS IN A CISTERN**
SYSTEM ZUM BLOCKIEREN DER BEWEGUNG VON REGULIERUNGSELEMENTEN IN SPÜLKÄSTEN
SYSTEME DE BLOQUAGE D'ELEMENTS DE REGULATION DANS UNE CITERNE

(43) Date of publication of application: 21.05.2008
(73) Proprietor: FOMINAYA, S.A., 46117 Betera (ES)
(72) Inventor: FOMINAYA GONZÁLEZ, Mercedes, 46117 Bétera (ES); FOMINAYA AGULLÓ, Pablo, (ES)
(74) Representative: Ungria López, Javier
(86) International application number: PCT/ES2005/000478
(87) International publication number: WO 2007/023193

(56) References cited:
- EP-A1- 1 350 969
- ES-T- 2 227 076
- ES-U- 139 492
- ES-U- 1 010 823
- ES-U- 1 010 823
- ES-U- 1 016 254
- ES-U- 1 053 738
- US-A- 4 122 862
- US-A- 4 122 862
- US-A- 5 509 766
- US-B1- 6 712 090

## Description

### OBJECT OF THE INVENTION

As stated in the title of this specification, the present invention relates to a system of locking for adjusting elements in a cistern intended to prevent the involuntary and passive rotation of elements mounted inside the cistern, such as for example in the flush mechanism, as well as in the threaded rod and float assembly, and also for any other adjusting element of this kind, with which maladjustments and anomalies in their functioning will be avoided.

So, it is a device applicable to any element to connect with the possibility of adjustment such as for example the actuation rod for the flush mechanism, or the adjustable rod which connects the float with the system of levers for a filling faucet.

Flush mechanisms possess two facing discs very close to each other: an upper one linked to a push-button mechanism or device and a lower one forming part of a threaded element which in turn forms part of the flush mechanism itself, in such a way that when pressing on the push-button, a downwards displacement takes place in which the upper disc pushes on the lower disc integral with the threaded element in order to activate the flush.

Said threaded element is an intermediate rod which is adjusted in height depending on the height of the cistern, in such a way that the aim is to bring both facing discs up close to each other in order to then immobilise the rotation of that threaded part in a specific desired position with the aim of ensuring proximity between the two discs and prevent later maladjustments.

On the other hand, when the locking system is applied to the intermediate rod and float unit, the aim in that case is to ensure firm linkage between those two elements in order to prevent rotations in relation to both.

### PRIOR ART OF THE INVENTION

Cisterns contain flush mechanisms, notable among which are those which incorporate a push-button device or mechanism with an upper disc and a disc facing that upper disc, this second disc being integral with a part that can be adjusted of height and which forms part of the flush mechanism itself.

Depending on the height of the cistern, the height adjustable part will be suitably positioned in such a way that the two discs are close to each other so that, when the push-button is pressed, the flushing takes place correctly.

After a period of time, it can happen that the height adjustable part slackens and becomes out of adjustment, in which case a vertical displacement of it takes place, increasing the distance between the discs and the consequent malfunctioning of the flush mechanism unit.

Also housed in cisterns are sets of adjustable rods and floats which are linked by means of threading, in such a way that in these cases too unwanted rotations can take place which will cause maladjustments and an undesired variation in the height of the water in the cistern as a consequence of those maladjustments.

US4122862A describes an threaded adjustment system using a snap lock with corresponding indentation to lock the respective components.

### DESCRIPTION OF THE INVENTION

With the aim of achieving the objectives and avoiding the drawbacks mentioned above, the invention proposes a system for locking of adjusting elements of a cistern applicable to any element to connect with possibility of adjustment. For example, it is applicable to flush mechanisms which incorporate a push-button mechanism with a disc and a lower mechanism constituting the flush mechanism itself, the lower mechanism incorporating an intermediate part or rod, adjustable in height, which includes a second facing disc very close to it, in such a way that when we press on the push-button, the upper disc pushes on the other producing a displacement of the flush mechanism and activating the flush.

When we stop pressing on the push-button, the flush mechanism recovers its rest position.

The discs are used in order to facilitate the connection of the push-button with the elements actuated by it, due to the fact that in the manufacture of the cistern there is usually a misalignment between the lower flush opening or lip and the upper opening of the cistern lid where the push-button mechanism unit is housed.

The invention is also applicable to the assembly of the intermediate rod and float which in theory are linked via a threading, in such a way that in this case the height adjustable part refers to the intermediate threaded rod. This rod connects the float with a system of levers for a filling faucet of the cistern.

Starting from this premise, a characteristic of the invention consists of certain means for locking the rotation of the height adjustable part of the flush mechanism and rod/flat unit.

To achieve this, considering the application of the flush mechanism, the discs possess projecting portions on their facing surfaces close to each other, which prevent the relative rotation between those two discs.

In turn, the intermediate rod which includes a disc furthermore comprises a threading in order to be coupled in the neck of the body of the mechanism, with a guide-nut being coupled to that thread by way of a locknut, in such a way that a second characteristic of the invention are means for ensuring the locking of the adjustable rod by immobilising said guide-nut in order to prevent its involuntary rotation and consequent malfunctioning of the flush mechanism assembly.

To achieve this, the guide-nut incorporates some radial projections in one of its front faces which fit into some complementary grooves or depressions made on a flat surface of the body of the mechanism when that guide-nut is tightened.

Considering the application of the invention to the intermediate rod and float assembly, the float also possesses a threaded neck for coupling to the rod, the guide-nut likewise including radial projections complementary to grooves made on the upper face of the float.

In this way, in no case the guide-nut will slacken involuntarily. Nevertheless, when it needs to be removed, it will be necessary to make a somewhat greater initial effort in order to overcome the initial resistance of the lock.

Below, in order to facilitate a better understanding of this specification and forming an integral part of thereof, some figures are attached in which, on an illustrative rather than limiting basis, the object of the invention has been represented.

### BRIEF DESCRIPTION OF THE DRAWINGS

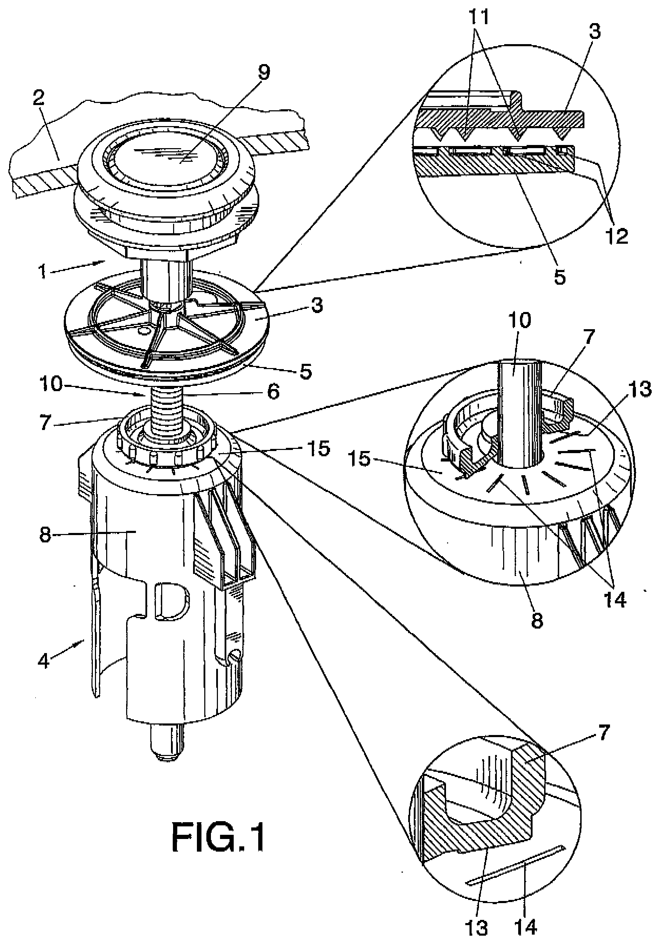

Figure **1****.**- Shows a perspective view of a part of a flush mechanism unit for cisterns which includes the inventive locking system applied to that flush mechanism.

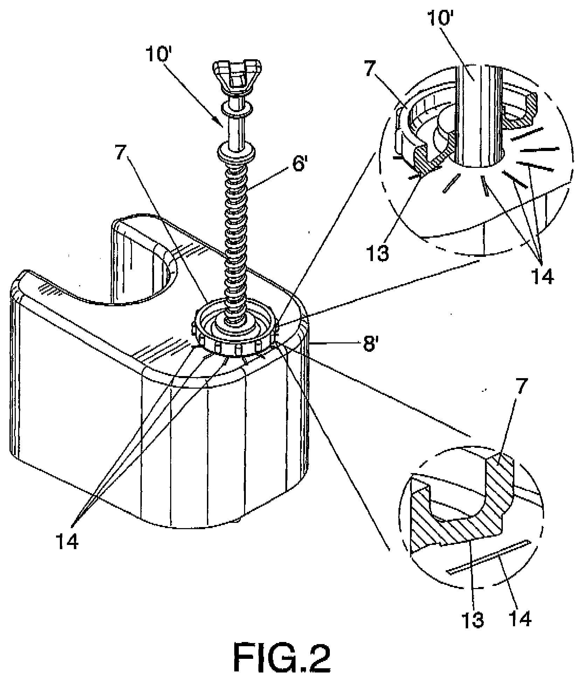

Figure 2..- Shows another view of the inventive system applied to the float / adjustable rod unit.

### DESCRIPTION OF THE PREFERRED FORM OF EMBODIMENT

Considering the numbering adopted in the figures, the system for locking of adjusting elements of a cistern consists of certain means for preventing the involuntary rotation of parts found inside the cistern, such as for example the parts of the flush mechanism unit and of the assembly of intermediate rod 10' and float 8', this being the rod that links the float to a system of levers for a filling faucet of the respective cistern.

The flush mechanism is of the type that comprises a push-button mechanism 1 which is fixed to the lid 2 of the cistern and includes a disc 3, furthermore comprising an actual flush mechanism, of which just the upper part 4 has been represented.

So, this flush mechanism includes a second disc 5 close to and facing the previous disc 3, which is integral with an intermediate rod 10 with a thread 6 which is coupled in an interior neck of a body of the mechanism 8, with a guide-nut 7 being coupled to the thread 6 of said intermediate rod 10 in the manner of a locknut in such a way that, thanks to that intermediate rod 10, the flush mechanism assembly will be able to take on different heights of cistern, with the discs 3 and 5 being at all times facing and very close to each other, so that, when the push-button 9 is pressed, the first disc 3 will be displaced downwards, pressing on the second disc 5 and so therefore on the flush mechanism, thus producing the flushing. The second disc 5 and intermediate rod 10 form a single whole part.

With the aim of preventing the involuntary rotation of this whole part 10, which includes the second disc 5, both this and the disc 3 of the push-button mechanism 1 include projections 11 and 12 on one of their facing surfaces which prevent relative rotations between the two discs 3 and 5.

In turn, the guide-nut 7 includes on its lower front face other radial projections 13 which, when said guide-nut 7 is tightened, fit in correspondence with other radial grooves 14 provided on a flat surface 15 of the mechanism 8, thereby preventing the involuntary rotation of said guide-nut 7 and therefore the involuntary rotation of the height adjusting part 10 will be prevented more effectively.

In the case of the assembly of intermediate rod 10' and float 8', the latter also includes a threaded neck where the said rod 10' is coupled by means of its threading 6'. Coupled in turn on the rod 10' is a guide-nut 7 which possesses the radial grooves 13 complementary to the grooves 14 made in the upper face of the float 8', thereby preventing relative rotations between the rod 10' and the float 8'.

## Claims

1. **System of locking for the adjusting elements of a cistern,** the cistern comprises at least one float (8') and adjusting element (10') assembly and a flush mechanism (4) which incorporates a body (8) where another such adjusting element (10) is housed, the adjusting elements (10, 10') each coupled to corresponding guide-nuts (7, 7') which, in the tightened position, act as a stop against upper surfaces (15) of float (8') and body (8) where the guide-nuts (7, 7') and the upper surfaces (15) of the respective float (8) and body (8') comprise complementary male elements and female elements such that the male elements fit into the female elements, thus locking the guide nuts (7, 7') on the upper surfaces (15) of the float (8') and of the body (8) said male and female elements being oriented in radial direction with respect tot the adjusting element they are locking.

2. **System of locking for the adjusting elements of a cistern,** according to claim 1, **characterised in that** the male elements are integral with the guide-nuts (7, 7'), while the female elements are located in the upper surfaces of the float (8) and the body (8').

3. **System of locking for the adjusting elements of a cistern,** according to claim 1, **characterised in that** the male elements are integral with the float (8) and the body (8'), while the female elements are located in the guide-nuts (7, 7').

4. **System of locking for the adjusting elements of a cistern,** according to any of claims 1 to 3, **characterised in that** the male elements consist of projections (13) while the female elements consist of grooves (14).

## Patentansprüche

1. System zum Arretieren für die Einstellelemente eines Spülkastens, wobei der Spülkasten wenigstens eine Baugruppe aus Schwimmer (8') und Einstellelement (10') sowie einen Spülmechanismus (4') umfasst, der einen Körper (8) enthält, in dem ein weiteres derartiges Einstellelement (10) aufgenommen ist, die Einstellelemente (10, 10') jeweils mit entsprechenden Führungsmuttern (7, 7') verbunden sind, die in der angezogenen Position als ein Anschlag an oberen Flächen (15) des Schwimmers (8') und des Körpers (8) wirken, und die Führungsmuttern (7, 7') sowie die oberen Flächen (15) des entsprechenden Schwimmers (8) und des Körpers (8') komplementäre Einführelemente und Aufnahmeelemente umfassen und die Einführelemente in die Aufnahmeelemente passen und so die Führungsmuttern (7, 7') an den oberen Flächen (15) des Schwimmers (8') sowie des Körpers (8) arretiert werden, wobei die Einführ- und die Aufnahmeelemente in radialer Richtung in Bezug auf das Einstellelement ausgerichtet sind, das sie arretieren.

2. System zum Arretieren für die Einstellelemente eines Spülkastens nach Anspruch 1, **dadurch gekennzeichnet, dass** die Einführelemente eine Einheit mit den Führungsmuttern (7, 7') bilden, während sich die Aufnahmeelemente in den oberen Flächen des Schwimmers (8) sowie des Körpers (8') befinden.

3. System zum Arretieren für die Einstellelemente eines Spülkastens nach Anspruch 1, **dadurch gekennzeichnet, dass** die Einführelemente eine Einheit mit dem Schwimmer (8) und dem Körper (8') bilden, während sich die Aufnahmeelemente in den Führungsmuttern (7, 7') befinden.

4. System zum Arretieren für die Einstellelemente eines Spülkastens nach einem der Ansprüche 1 bis 3, **dadurch gekennzeichnet, dass** die Führungselemente aus Vorsprüngen (13) bestehen, während die Aufnahmeelemente aus Nuten (14) bestehen.

## Revendications

1. Système de verrouillage pour les éléments de réglage d'une citerne, la citerne comprend au moins un ensemble de flotteur (8') et d'élément de réglage (10') et un mécanisme de chasse d'eau (4) qui comprend un corps (8) dans lequel un autre tel élément de réglage (10) est logé, les éléments de réglage (10, 10') chacun couplés à des écrous de guidage (7, 7') correspondants qui, en position serrée, agissent comme une butée contre les surfaces supérieures (15) du flotteur (8') et du corps (8) ; où les écrous de guidage (7, 7') et les surfaces supérieures (15) du flotteur (8) et du corps (8') respectifs comprennent des éléments mâles et des éléments femelles complémentaires de telle manière que les éléments mâles s'ajustent dans les éléments femelles, verrouillant ainsi les écrous de guidage (7, 7') sur les surfaces supérieures (15) du flotteur (8') et du corps (8), lesdits éléments mâles et femelles étant orientés dans une direction radiale par rapport à l'élément de réglage qu'ils verrouillent.

2. Système de verrouillage pour les éléments de réglage d'une citerne, selon la revendication 1, **caractérisé en ce que** les éléments mâles sont d'un seul bloc avec les écrous de guidage (7, 7'), alors que les éléments femelles sont situés dans les surfaces supérieures du flotteur (8) et du corps (8').

3. Système de verrouillage pour les éléments de réglage d'une citerne, selon la revendication 1, **caractérisé en ce que** les éléments mâles sont d'un seul bloc avec le flotteur (8) et le corps (8'), alors que les éléments femelles sont situés dans les écrous de guidage (7, 7').

4. Système de verrouillage pour les éléments de réglage d'une citerne selon l'une quelconque des revendications 1 à 3, **caractérisé en ce que** les éléments mâles sont constitués de saillies (13) alors que les éléments femelles sont constitués de rainures (14).
